# EUROPÄISCHE PATENTSCHRIFT

(11) **EP 2 906 489 B1**
(45) Veröffentlichungstag und Bekanntmachung des Hinweises auf die Patenterteilung: **31.05.2017**
(21) Anmeldenummer: 13765671.6
(22) Anmeldetag: 12.09.2013
(51) Int. Cl.: B65G 17/06, B65G 17/10

(54) **BAUSATZ FÜR EINEN SCHARNIERBANDFÖRDERER**
ASSEMBLY SET FOR A SLAT-BAND CONVEYOR
ENSEMBLE DE PIÈCES POUR UN TRANSPORTEUR À CHAÎNES CHARNIÈRES

(30) Priorität: 11.10.2012 DE 102012109696
(43) Veröffentlichungstag der Anmeldung: 19.08.2015
(73) Patentinhaber: Kabelschlepp GmbH, 57482 Wenden-Hünsborn (DE)
(72) Erfinder: DIEBEL, Michael, 35687 Dillenburg (DE); KLEINHANS, André, 35708 Haiger (DE)
(74) Vertreter: Neumann, Ditmar
(86) Internationale Anmeldenummer: PCT/EP2013/068904
(87) Internationale Veröffentlichungsnummer: WO 2014/056669

(56) Entgegenhaltungen:
- EP-A2- 1 857 383
- WO-A1-2010/021116
- DE-U1- 8 915 287
- US-A- 3 866 743

## Beschreibung

Der Gegenstand der Erfindung betrifft einen Bausatz für einen Scharnierbandförderer nach dem Oberbegriff des Anspruchs 1. Zum Abtransport von Metallabfällen, wie Späne oder dergleichen, sind Scharnierbandförderer bekannt. Sie werden für Metall verarbeitende Maschinen eingesetzt, um Metallabfälle wie Späne oder dergleichen in einen Sammelbehälter zu fördern oder von der Metall verarbeitenden Maschine weg zu transportieren.

Ein Scharnierbandförderer weist ein Förderband auf, das in Form eines Endlosbands ausgebildet ist. Das Förderband ist durch Platten gebildet, welche vorzugsweise aus verschleißfesten Stahlblechen hergestellt sind, die gelenkig miteinander verbunden sind.

Durch die EP 1 857 383 A2 ist ein Scharnierbandförderer bekannt, der besonders ausgebildete Platten aufweist. Durch die Ausgestaltung der Platten wird sichergestellt, dass zwischen den Platten im Wesentlichen kein Spalt vorhanden ist, Abfälle, insbesondere Metallabfälle wie Späne oder dergleichen gelangen können, durch die der Verschleiß der Platten im Gelenkbereich erhöht wird.

Die WO 2010/021116 A1 offenbart einen Bausatz für einen Scharnierbandförderer nach dem Oberbegriff des Anspruchs 1. Ausgehend von diesem Stand der Technik liegt der vorliegenden Erfindung die Zielsetzung zugrunde, einen Bausatz für einen Scharnierbandförderer bereitzustellen, der den Aufbau des Scharnierbandförderers vereinfacht.

Die gestellte Aufgabe wird erfindungsgemäß gemäß durch die Merkmale des Anspruchs 1 gelöst. Vorteilhafte Weiterbildungen werden in den Unteransprüchen beschrieben. Die in den Ansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Durch den erfindungsgemäßen Bausatz wird die Bildung eines Scharnierbandförderers vereinfacht. Insbesondere wird durch die Erfindung die Anzahl der benötigten Bauteile zur Ausbildung des Scharnierbandförderers stark reduziert. Der Vorteil der Erfindung kann auch darin gesehen werden, dass ein vereinfachter Austausch der Seitenborde bzw. der Seitenteile ermöglicht wird, da lediglich ein Seitenteil verwendet wird, egal an welcher Stelle der gelenkig miteinander verbundenen Seitenborde das Seitenteil ausgetaucht werden soll.

Die Seitenborde umfassen zwei eng aneinander liegende Seitenteile, die auch als Innenteil und ein Außenteil bezeichnet werden können. Die Seitenteile weisen einen ersten Endbereich und einen zweiten Endbereich auf, wobei die Kontur der Endbereiche so ausgebildet ist, dass diese ineinander greifen. Wird ein Seitenbord aus solchen Seitenteilen aufgebaut, sind die Seitenborde miteinander verbunden, so wird der Spalt zwischen den innen liegenden Seitenteilen und der Spalt zwischen den außen liegenden Seitenteilen der Seitenborde im Wesentlichen minimiert. Dies hat den Vorteil, dass die innen und außen
liegenden Seitenteile der Seitenborde eine im Wesentlichen geschlossene Wandfläche der Seitenborde bilden. Diese im Wesentlichen geschlossene Fläche der Seitenborde hat den Vorteil, dass das Fördergut nicht in die Spalte oder Stoßkanten hineingeraten kann, und so die Kinematik der Seitenborde beeinträchtigt. Ferner hat dies den Vorteil, dass das Fördergut nicht in den Gelenkbereich gelangen kann, und es so zur Beschädigung der Gelenke, über die die Seitenborde miteinander verbunden sind, geschädigt werden.

Besonders bevorzugt ist dabei eine Ausgestaltung der Seitenteile, an denen der erste Endbereich eine im Wesentlichen kreisbogenförmige Kontur aufweist. Der zweite Endbereich weist gleichfalls eine im Wesentlichen kreisbogenförmige Kontur auf, wobei die eine kreisbogenförmige Kontur als konvexe und die andere kreisbogenförmige Kontur als konkave Kontur bezeichnet werden kann.

Das Seitenteil weist eine Gelenkbohrung auf. Die Anordnung der Gelenkbohrung am Seitenteil ist so gewählt, dass bei der Ausbildung der Seitenborde die Teilung erhalten bleibt.

Zur Ausbildung des Scharnierbandförderers ist wenigstens ein Halter vorgesehen. Der Halter ist mit einem Seitenteil und einer Platte verbunden. Dies eröffnet eine noch weitere Vereinfachung des Aufbaus des Scharnierbandförderers. Der Halter kann an die Platte und/oder das Seitenteil angepasst sein, was jedoch nicht zwingend ist. Ein Halter kann mit unterschiedlich ausgebildeten Platten verbunden werden. Der Halter bildet ein standardisiertes Bauteil, welches für Scharnierbandförderer mit unterschiedlichen Förderbändern verwendet werden kann.

Zur Vereinfachung der Montage sowie zur Vereinfachung des Ersatzes des Seitenbords bzw. eines Seitenteils wird vorgeschlagen, dass der Halter einen Durchgang aufweist, durch den sich ein Gelenkbolzen hindurch erstreckt. Der Gelenkbolzen dient nicht nur zur Verbindung der Seitenborde miteinander sondern auch zur Verbindung des Halters mit einem Seitenteil.

Zur Verringerung der Anzahl der Bauteile wird vorgeschlagen, dass der Halter und der Gelenkbolzen eine Baueinheit bilden. Der Gelenkbolzen kann mit dem Halter form- und/oder kraftschlüssig verbunden sein.

Gemäß einer noch weiteren vorteilhaften Ausgestaltung des Bausatzes wird vorgeschlagen, dass der Halter Positioniermittel aufweist, die mit dem Seitenteil zusammenwirken. Dies hat den Vorteil, dass eine definierte Einbaulage des Halters erzielt wird. Die Positioniermittel können auch zur Fixierung des Halters am Seitenteil dienen, so dass eine vereinfachte Montage erreicht wird.

Nach einer noch weiteren vorteilhaften Ausgestaltung des Bausatzes wird vorgeschlagen, dass wenigstens einige Seitenborde mit wenigstens einem Antriebsmittel verbunden sind. Bei dem Antriebsmittel handelt es sich vorzugsweise um eine Gelenkkette. Die Verbindung der Seitenborde mit der Gelenkkette erfolgt vorzugsweise über die Gelenkbolzen.

Die Seitenteile sind vorzugsweise als Stanzteile ausgebildet. Dies vereinfacht die Herstellung der Seitenteile.

Weitere Vorteile und Einzelheiten des erfindungsgemäßen Bausatzes für einen Scharnierbandförderer werden anhand des in der Zeichnung dargestellten Ausführungsbeispiels erläutert, ohne dass der Gegenstand der Erfindung, welcher durch die Ansprüche definiert ist, auf dieses konkrete Ausführungsbeispiel beschränkt wird. Es zeigen:
- Fig. 1:: ein erstes Ausführungsbeispiel eines Seitenteils,
- Fig. 2:: ein Seitenbord gebildet durch zwei Seitenteile nach Fig. 1 in einer Vorderansicht,
- Fig. 3:: das Seitenbord nach Fig. 2 in einer Draufsicht,
- Fig. 4:: das Seitenbord mit einem Halter in einer perspektivischen Ansicht,
- Fig. 5:: ein zweites Ausführungsbeispiel eines Seitenteils,
- Fig. 6:: ein Ausführungsbeispiel eines Halters, und
- Fig. 7:: einen Scharnierbandförderer.

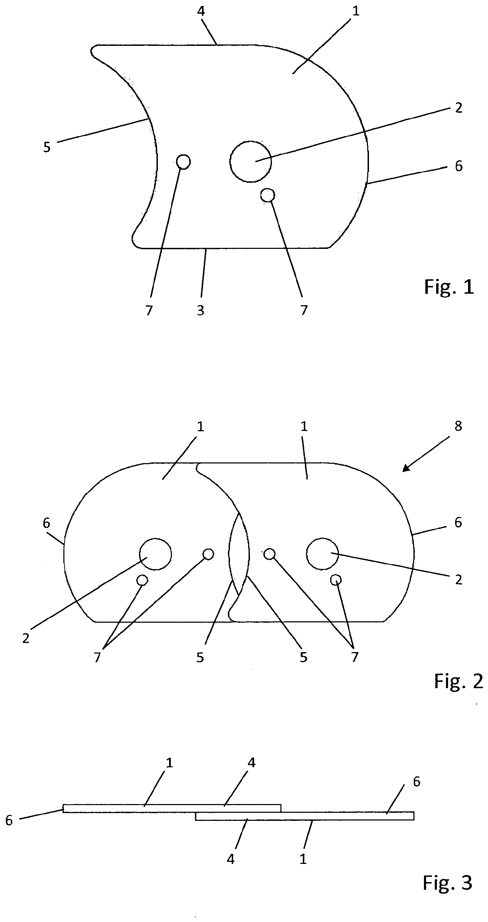

Fig. 1 zeigt ein erstes Ausführungsbeispiel eines Seitenteils 1. Das Seitenteil 1 ist ein Blechteil, welches vorzugsweise als ein Stanzteil hergestellt worden ist. Das Seitenteil 1 weist einen unteren Rand 3 auf, der bspw. auf einer entsprechenden Auflage gleiten kann. Ggf. ist der untere Rand 3 mit Gleitmitteln, insbesondere mit einer Gleitbeschichtung oder wenigstens einem Gleitschuh versehen, um die Reibungsverluste während der Bewegung des Scharnierbandförderers zu reduzieren. Parallel zum unteren Rand 3 ist ein oberer Rand 4 vorgesehen.

Das Seitenteil weist einen ersten Endbereich 5 und einen zweiten Endbereich 6 auf. Die Endbereiche 5, 6 weisen eine Kontur auf, die im Wesentlichen kreisbogenförmig ist. Die Kontur des ersten Endbereichs ist konkav. Der zweite Endbereich 6 weist eine konvexe kreisbogenförmige Kontur auf. Die Radien der Konturen sind im Wesentlichen gleich.

Mit dem Bezugszeichen 7 ist ein Positionsmittel bezeichnet, bei dem es sich bspw. um Bohrungen handelt. Die Positionsmittel 7 sind bezüglich der Längsachse des Seitenteil 1 symmetrisch angeordnet, so dass eine vorgegebene Montagemöglichkeit des Seitenteils 1 mit einem Halter gewährleistet wird.

In der Fig. 2 ist ein Seitenbord eines Scharnierbandförderers dargestellt. Das Seitenbord 8 ist gebildet durch zwei Seitenteile 1, die aneinander liegend angeordnet sind. Die zweiten Endbereiche 6 bilden gleichzeitig die Endbereiche des Seitenbords 8. Zwei Seitenteile 1 werden durch eine entsprechende Montage bzw. durch das Drehen eines Seitenteils 1 um eine Querachse hergestellt. Die Gelenkbohrungen 2 werden mit einer nicht dargestellten Antriebskette verbunden.

Die Fig. 3 zeigt das Seitenbord 8 in einer Draufsicht. Werden mehrere Seitenborde miteinander verbunden, so bilden diese einen im Wesentlichen durchgehenden oberen Rand sowie einen im Wesentlichen durchgehenden hinteren Rand. Dadurch, dass ein im Wesentlichen durchgehender oberer Rand vorliegt, wird sichergestellt, dass kein Fördergut zwischen zwei gelenkig miteinander verbundenen Seitenborden hineingelangen kann.

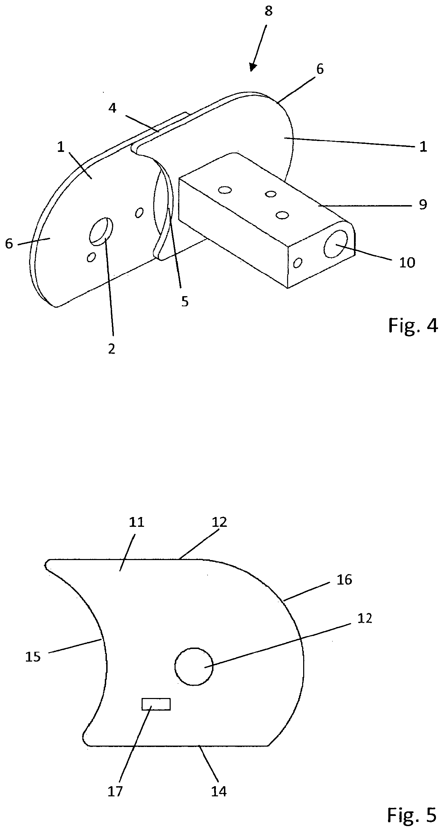

In der Fig. 4 ist ein Seitenbord 8 mit einem Halter 9 dargestellt. Der Halter 9 weist vorzugsweise nicht dargestellte Vorsprünge auf, die in die Positionsmittel des Seitenteils 1 eingreifen. Durch die Kombination Positionsmittel und Vorsprünge wird eine definierte Zusammenbausituation des Halters 9 mit dem Seitenteil 1 erzielt. Aus der Darstellung nach Fig. 4 ist ersichtlich, dass der Halter 9 einen Durchgang 10 aufweist. Der Durchgang 10 ist im Querschnitt kreisförmig und koaxial zu der Gelenkbohrung 2 ausgebildet. In den Durchgang 10 ist ein Gelenkbolzen, der nicht dargestellt ist, einführbar. Dieser erstreckt sich durch das Seitenteils 1 des Seitenbords sowie des nicht dargestellten zweiten Seitenteils, so dass eine gelenkige Verbindung zweier Seitenborde erreicht wird. Ein entsprechender Halter 9 kann an dem anderen Seitenteil 1 vorgesehen sein. Der Halter 9 dient zur Verbindung mit einer Platte, die in Fig. 4 nicht dargestellt ist.

In der Fig. 5 ist ein zweites Ausführungsbeispiels eines Seitenteils 11 dargestellt. Auch das Seitenteil 11 weist eine Gelenkbohrung 12 auf. Das Seitenteil 11 weist einen unteren Rand 13 und einen parallel hierzu verlaufenden oberen Rand 14 auf. Aus der Fig. 5 ist ersichtlich, dass das Seitenteil 11 einen ersten Endbereich 15 aufweist, der konkav gekrümmt ist und des Weiteren einen konvex gekrümmten zweiten Endbereich 16. Die Krümmungsradien der Bereiche 15, 16 sind vorzugsweise gleich.

Mit dem Bezugszeichen 17 ist ein im Wesentlichen rechteckförmiges Positionsmittel bezeichnet. Das Positionsmittel 17 ist eine Ausstanzung aus dem als Stanzteil aus einem Blech hergestellten Seitenteil 11.

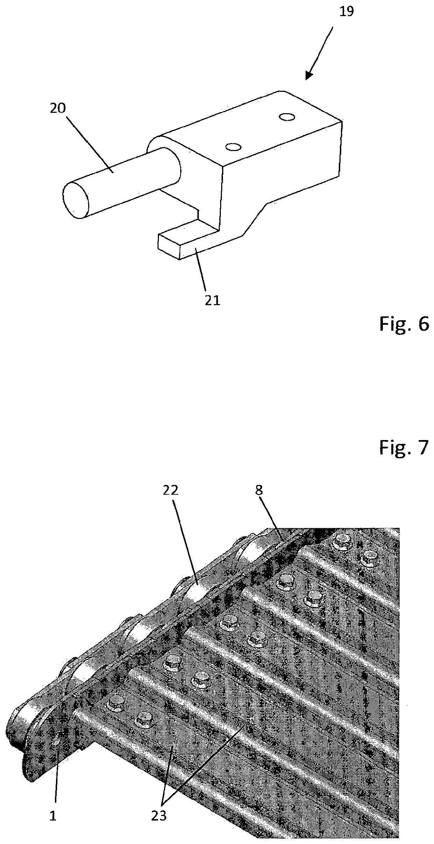

In der fig. 6 ist ein Halter 19 dargestellt. Der Halter 19 weist einen Gelenkbolzen auf, dessen Querschnitt an die Gelenkbohrung 12 angepasst ist. Der Halter 19 weist des Weiteren eine Nase 21 auf, die so ausgebildet ist, dass diese in das als Aussparung 17 ausgebildete Positionsmittel hineinpasst. Durch das Positionsmittel 17 und die Nase 21 wird eine definierte Einbaulage des Halters 19 erreicht. Des Weiteren können die Nase 21 und die Aussparung 17 Momente um die Gelenkachse, die durch die Gelenkbohrung 12 und den Gelenkbolzen 20 durchgeht, aufnehmen.

Fig. 7 zeigt ein Ausführungsbeispiel eines Scharnierbandförderers in einem Ausschnitt. Es ist eine Gelenkkette 22 vorgesehen. Die Gelenkkette ist mit Seitenborden 8 verbunden. Insbesondere erstrecken sich Gelenkbolzen an die Rollen der Gelenkkette 22 durch die Seitenteile 1 der Seitenborde 8. Mit den Seitenborden 8 sind Platten 23 verbunden. Mittels der Platten 23 wird ein Fördergut gefördert.

Der erfindungsgemäße Bausatz für einen Scharnierbandförderer ermöglicht eine einfache Montage und Bauweise eines Scharnierbandförderers. Insbesondere kann der Austausch eines Seitenteils oder eines Seitenbords relativ günstig erfolgen.

Es besteht auch die Möglichkeit, auch einen mehrsträngigen Scharnierbandförderer bereitzustellen. Bei einem zweisträngigen Scharnierbandförderer würde der mittlere Seitenbordenstrang bereitgestellt werden, wobei die Halter sowohl rechts als auch links der Seitenborde vorgesehen wären, so dass sowohl Platten rechts als auch links vom mittleren Seitenbordenstrang vorhanden wären.

### Bezugszeichenliste

- 1: Seitenteil
- 2: Gelenkbohrung
- 3: unterer Rand
- 4: oberer Rand
- 5: erster Endbereich
- 6: zweiter Endbereich
- 7: Positionsmittel
- 8: Seitenbord
- 9: Halter
- 10: Durchgang
- 11: Seitenteil
- 12: Gelenkbohrung
- 13: unterer Rand
- 14: oberer Rand
- 15: erster Endbereich
- 16: zweiter Endbereich
- 17: Positionsmittel
- 18:
- 19: Halter
- 20: Gelenkbolzen
- 21: Vorsprung
- 22: Gelenkkette
- 23: Platte

## Patentansprüche

1. Bausatz für einen Scharnierbandförderer, mit Seitenborden (8), die durch zwei Seitenteile (1, 11) gebildet sind, wobei die Seitenborde (8) gelenkig miteinander verbunden sind, und mit Platten (23) mittels denen ein Fördergut gefördert wird, die mit den Seitenborden (8) verbunden sind, wobei die Seitenteile (1, 11) im Wesentlichen die gleiche Geometrie aufweisen, das Seitenteil (1, 11) einen ersten Endbereich (5, 15) und einen zweiten Endbereich (6, 16) aufweist, wobei die Kontur der Endbereiche (5, 6, 15, 16) so ausgebildet ist, dass diese ineinander greifen, und wobei die Seitenteile (1, 11) eine Gelenkbohrung (2, 12) aufweisen, **dadurch gekennzeichnet dass** wenigstens ein Halter (9, 19) mit einem Seitenteil (1, 11) und einer Platte (23) verbunden ist, wobei die gelenkige Verbindung zweiter Seitenborden (8) sowie die Verbindung zwischen dem Halter (9, 19) und dem Seitenteil (1, 11) durch einen Gelenkbolzen erreicht wird, der sich durch die Gelenkbohrung (2, 12) der entsprechenden Seitenteile (1, 11) beider Seitenborden (8) erstreckt.

2. Bausatz nach Anspruch 1, **dadurch gekennzeichnet, dass** die Kontur im Wesentlichen kreisbogenförmig ist.

3. Bausatz nach Anspruch 1 oder 2, **dadurch gekennzeichnet, dass** der Halter (9) einen Durchgang (10) aufweist, durch den der Gelenkbolzen durchführbar ist.

4. Bausatz nach Anspruch 1 oder 2, **dadurch gekennzeichnet, dass** der Halter (19) den Gelenkbolzen (20) aufweist.

5. Bausatz nach einem der Ansprüche 1 bis 4, **dadurch gekennzeichnet, dass** der Halter (9, 19) Positioniermittel (7, 17) aufweist, die mit dem Seitenteil (1, 11) zusammenwirken.

6. Bausatz nach einem der Ansprüche 1 bis 5, **dadurch gekennzeichnet, dass** wenigstens einige Seitenborde (8) mit wenigstens einem Antriebsmittel (22) verbunden sind.

7. Bausatz nach wenigsten einem der vorhergehenden Ansprüchen 1 bis 6, **dadurch gekennzeichnet, dass** das Seitenteil (1, 11) im Wesentlichen ein Stanzteil ist.

## Claims

1. Kit for a hinged-belt conveyor, with side flanges (8) that are formed by two side parts (1, 11), the side flanges (8) being interconnected in an articulated manner, and with plates (23) that are connected to side flanges (8) by means of which transported material is conveyed, wherein the side parts (1, 11) have substantially the same geometry, the side part (1, 11) has a first end area (5, 15) and a second end area (6, 16), wherein the contour of the end areas (5, 6, 15, 16) is embodied such that these engage in one another and wherein the side parts (1, 11) have a joint bore (2, 12), **characterized in that** at least a holder (9, 19) is connected to a side part (1, 11) and a plate (23), wherein the jointed connection between two side flanges (8) as well as the connection between the holder (9, 19) and the side part (1, 11) is achieved by a joint bolt extending through the joint bores (2, 12) of the respective side parts (1, 11) of both side flanges (8).

2. Kit as set forth in claim 1, **characterized in that** the contour is substantially arched.

3. Kit as set forth in claim 1 or 2, **characterized in that** the holder (9) has a passage (10) through which the joint bolt can be passed.

4. Kit as set forth in claim 1 or 2, **characterized in that** the holder (19) has the joint bolt (20).

5. Kit as set forth in any one of claims 1 to 4, **characterized in that** the holder (9, 19) has a positioning means (7, 17) that cooperates with the side part (1, 11).

6. Kit as set forth in any one of claims 1 to 5, **characterized in that** at least several side flanges (8) are connected to at least one drive means (22).

7. Kit as set forth in at least one of preceding claims 1 to 6, **characterized in that** the side part (1, 11) is substantially a punched part.

## Revendications

1. Ensemble de pièces pour un transporteur à chaînes à charnières, comprenant des bords latéraux (8) qui sont formés par deux parties latérales (1, 11), les bords latéraux (8) étant connectés l'un à l'autre de manière articulée et comprenant des plaques (23) au moyen desquelles un produit à transporter est transporté, lesquelles sont connectées aux bords latéraux (8), les parties latérales (1, 11) présentant essentiellement la même géométrie, la partie latérale (1, 11) présentant une première région d'extrémité (5, 15) et une deuxième région d'extrémité (6, 16), le contour des régions d'extrémité (5, 6, 15, 16) étant réalisé de telle sorte que celles-ci s'engagent les unes dans les autres, et les parties latérales (1, 11) présentant un alésage d'articulation (2, 12), **caractérisé en ce qu'**au moins un support (9, 19) est connecté à une partie latérale (1, 11) et à une plaque (23), la connexion articulée de deux bords latéraux (8) ainsi que la connexion entre le support (9, 19) et la partie latérale (1, 11) étant réalisées par un boulon d'articulation qui s'étend à travers l'alésage d'articulation (2, 12) des parties latérales correspondantes (1, 11) des deux bords latéraux (8).

2. Ensemble de pièces selon la revendication 1, **caractérisé en ce que** le contour est essentiellement en forme d'arc de cercle.

3. Ensemble de pièces selon la revendication 1 ou 2, **caractérisé en ce que** le support (9) présente un passage (10) à travers lequel peut être guidé le boulon d'articulation.

4. Ensemble de pièces selon la revendication 1 ou 2, **caractérisé en ce que** le support (19) présente le boulon d'articulation (20).

5. Ensemble de pièces selon l'une quelconque des revendications 1 à 4, **caractérisé en ce que** le support (9, 19) présente des moyens de positionnement (7, 17) qui coopèrent avec la partie latérale (1, 11).

6. Ensemble de pièces selon l'une quelconque des revendications 1 à 5, **caractérisé en ce qu'**au moins certains bords latéraux (8) sont connectés à au moins un moyen d'entraînement (22).

7. Ensemble de pièces selon au moins l'une quelconque des revendications précédentes 1 à 6, **caractérisé en ce que** la partie latérale (1, 11) est essentiellement une pièce estampée.
